# EUROPÄISCHE PATENTSCHRIFT

(11) **EP 3 170 694 B1**
(45) Veröffentlichungstag und Bekanntmachung des Hinweises auf die Patenterteilung: **01.09.2021**
(21) Anmeldenummer: 16002412.1
(22) Anmeldetag: 14.11.2016
(51) Int. Cl.: B60N 2/75

(54) **ARMLEHNE**
ARMREST
ACCOUDOIR

(30) Priorität: 17.11.2015 DE 102015014723
(43) Veröffentlichungstag der Anmeldung: 24.05.2017
(73) Patentinhaber: GRAMMER AG, 92289 Ursensollen (DE)
(72) Erfinder: Delling, Gerhard, 92546 Schmidgaden (DE); Himmelhuber, Erwin, 92237 Sulzbach-Rosenberg (DE); Keller, Hubert, 92245 Kümmerbruck (DE)
(74) Vertreter: Roche, von Westernhagen & Ehresmann

(56) Entgegenhaltungen:
- EP-A2- 0 566 213
- DE-A1- 2 428 512
- DE-A1-102009 037 068
- FR-A1- 2 318 758
- GB-A- 2 305 690

## Beschreibung

Die Erfindung betrifft eine Armelehne. Eine solche ist z.B. eine Armlehne eines Fahrzeugsitzes. Die Armlehne ist aus offenkundiger Vorbenutzung bekannt. Sie umfasst eine Armauflage, welche um eine Schwenkachse schwenkbar an einer Struktur gelagert ist. Die Struktur ist z.B. von der Struktur des Fahrzeugsitzes oder von der Struktur des Fahrzeugs gebildet. Die Schwenkachse wird z.B. von zwei Passschrauben gebildet, mittels denen gegenüberliegende Seitenbereiche der Armauflage an der Struktur gelagert werden, indem die Passschrauben Bohrungen der Armauflage durchgreifen.

Um die Gleitreibung zwischen der Passschraube und der Struktur zu verbessern, ist eine Buchse, z.B. eine Kunststoffbuchse, vorgesehen. Zwischen der Struktur und der Armauflage ist auf beiden Seiten der Armauflage wenigstens eine Tellerfeder angeordnet, mittels welcher die Armauflage außer Kontakt mit der Struktur belastet ist, wodurch ein Klappern vermieden wird. Die Tellerfedern sind auf der kreiszylindrischen Außenfläche der Kunststoffbuchse gelagert, die ihrerseits auf die Außenfläche der Passschraube aufgesteckt ist. Um die Anpresskraft der Tellerfedern auf die Oberfläche der Struktur zu verteilen, ist in der Regel zusätzlich eine Scheibe zwischen der Tellerfeder und der Struktur angeordnet.

Bei der aus dem Stand der Technik bekannten Ausführung ist beim Schwenken der Armauflage die Reibfläche undefiniert. D.h. eine Relativbewegung kann z.B. zwischen der Scheibe und der Tellerfeder, zwischen den Tellerfedern oder zwischen der Tellerfeder und der Buchse auftreten. Wenn die Relativbewegung zwischen bestimmten Reibpartnern stattfindet, können unerwünschte Geräusche die Folge sein.

Aus der EP 2 316 690 A1 ist eine Armlehne mit einer Armauflage bekannt, die schwenkbar an zwei Stützteilen gelagert ist. Die Armauflage umfasst zwei Lagerlaschen, wobei jede Lagerlasche schwenkbar an einem Stützteil angeordnet ist. Auf die Lagerlasche ist ein Kunststoffclip aufgesteckt, der mit einer Bohrung versehen ist. Die Bohrung fluchtet mit einer Bohrung der Lagerlasche. Eine Federscheibe stützt sich einerseits an dem Clip und andererseits an dem Kragen einer Hülse ab, deren zylindrische Außenfläche eine Öffnung der Federscheibe sowie die Öffnungen in dem Clip, der Seitenlasche und dem Stützteil durchsetzt und mit Rastarmen die Öffnung in dem Stützteil hintergreift. Mittels auf dem Clip befindlicher Rampen, die mit wellenartigen Erhebungen der Federscheibe zusammenwirken, kann durch Drehen der Federscheibe die Anpresskraft und damit die auf die Seitenlaschen wirkende Bremskraft eingestellt werden.

Aus der DE 24 28 512 A1 ist ein Scharnier bzw. Gelenk zum Verbinden zweier Bauelemente unter Verwendung einer Lagerhülse offenbart, aus der GB 2 305 690 A ist ein Reibgelenk für einen Laptop offenbart, aus der EP 0 666 213 A2 und der FR 2 318 758 A1 sind weitere Lagervorrichtungen für Armlehnen offenbart und aus der DE 10 2009 037 068 A1 ist eine Lagerbuchse insbesondere für ein Schaltungsgehäuse eines Fahrzeugs zur Lagerung eines Wählhebels offenbart, wobei der Wählhebel auf einem angegossenen Lagerzapfen des Schaltungsgehäuses mittels der Lagerbuchse drehbar gelagert ist, und wobei die Lagerbuchse radiale und axiale Ausgleichselemente aufweist, die den Wählhebel auf dem Lagerzapfen bei Schwenkbewegungen axial arretieren.

Es war Aufgabe der Erfindung eine Armlehne mit einem schwenkbaren Teil zu schaffen, welches beim Schwenken keine störenden Geräusche verursacht.

Die Aufgabe wird gelöst durch eine Armlehne mit den Merkmalen des Anspruchs 1.

Die Armlehne umfasst ein erstes Teil und wenigstens ein zweites Teil. Das zweite Teil ist mittels zwei Lagervorrichtungen um eine Schwenkachse schwenkbar relativ zu dem ersten Teil gelagert. Jede Lagervorrichtung umfasst einen Lagerstift. Der Lagerstift kann z.B. zur Befestigung an dem ersten Teil oder an dem zweiten Teil ein Gewinde aufweisen. Der Lagerstift umfasst z.B. zur Zentrierung eine kreiszylindrische Passfläche.

Der Lagerstift bildet eine axiale Haltefläche aus. Der Lagerstift bildet z.B. einen Kopf mit einer axialen Haltefläche aus. Das bedeutet im Sinne der Erfindung, dass die Haltefläche Kräfte aufnehmen kann, die in axialer Richtung wirken.

Zu der Lagerachse ist eine Lagerhülse koaxial angeordnet. Eine Außenfläche der Lagerhülse steht mit einem der Teile in Kontakt. Eine Innenfläche der Lagerhülse steht mit der Außenfläche des Lagerstiftes in Kontakt. Zwischen der Lagerhülse und einem der Teile findet eine Relativbewegung in Form einer Schwenkbewegung um die Schwenkachse statt. Die Lagerhülse kann aus einem Material mit guten Gleiteigenschaften beschaffen sein.

Der Lagerstift ist mit ersten Formschlussmitteln versehen, die mit zweiten Formschlussmitteln der Lagerhülse in Eingriff stehen und eine Relativbewegung zwischen der Lagerhülse und dem Lagerstift in Schwenkrichtung verhindern. D.h., die Lagerhülse kann sich aufgrund der zusammenwirkenden Formschlussmittel nicht relativ zu dem Lagerstift um die Schwenkachse drehen. Ist z.B. der Lagerstift fest mit dem ersten Teil verbunden, ist auch die Lagerhülse mit dem ersten Teil bewegungsverbunden. Wenn der Lagerstift fest mit dem zweiten Teil verbunden ist, ist die Lagerhülse mit dem zweiten Teil bewegungsverbunden.

Die ersten Formschlussmittel sind z.B. an einer Außenfläche des Lagerstiftes und die zweiten Formschlussmittel an einer mit der Außenfläche in Kontakt stehenden Innenfläche der Lagerhülse ausgebildet. Die Außenfläche ist z.B. eine von der Schwenkachse radial nach außen gerichtete Fläche. Die Innenfläche ist z.B. eine radial zur Schwenkachse gerichtete Fläche.

Die zusammenwirkenden Formschlussmittel sind z.B. von Verzahnungen oder Mehrkantstrukturen gebildet.

Der Lagerstift durchgreift z.B. eine Offnung in einem Haltesteg des ersten Teils und greift in die Armauflage ein. Die Armauflage ist z.B. zwischen zwei Haltestegen des ersten Teils angeordnet und beidseitig der Armauflage ist eine Lagervorrichtung angeordnet, wobei jeweils ein Lagerstift eine Öffnung des Haltestegs durchgreift und in die Armauflage eingreift. In diesem Fall findet eine Relativbewegung zwischen der Lagerhülse und dem Haltesteg statt.

Die Lagerhülse bildet einen Kragen mit einer axialen Gegenfläche. Das bedeutet im Sinne der Erfindung, dass die Gegenfläche Kräfte aufnehmen kann, die in axialer Richtung wirken. Z.B. kann die Haltefläche Kräfte aufnehmen, die in eine erste axiale Richtung wirken und die Gegenfläche kann Kräfte aufnehmen, die in eine zweite, der ersten Richtung entgegengesetzte Richtung wirken. Z.B. können andere Teile oder Bereiche von anderen Teilen zwischen der Haltefläche und der Gegenfläche gehalten sein. Beispielsweise kann eine Feder zwischen der Haltefläche und der Gegenfläche gehalten sein.

Zwischen der axialen Haltefläche des Lagerstiftes und der axialen Gegenfläche der Lagerhülse ist wenigstens ein Funktionselement angeordnet, wobei ein Funktionselement von einer Feder gebildet ist. Das Funktionselement ist z.B. von einer Tellerfeder gebildet, welche das zweite Teil axial belastet. Es können ein oder mehrere gleiche oder auch unterschiedliche Funktionselemente zwischen der Haltefläche und der Gegenfläche angeordnet sein.

Der Lagerstift ist z.B. fest mit dem ersten Teil oder mit dem zweiten Teil verbunden. Die Verbindung kann jeder Art sein, wie z.B. Schraubverbindung, Schweißverbindung, Klebeverbindung etc. Der Lagerstift schwenkt dann zusammen mit dem verbundenen Teil und bewegt sich relativ zu dem anderen Teil. Der Lagerstift schwenkt z.B. zusammen mit dem zweiten Teil und bewegt sich relativ zu dem ersten Teil.

Die Lagervorrichtung kann z.B. eine Scheibe umfassen, welche mit dem ersten Teil in Kontakt steht, um die auf das erste Teil wirkenden Kräfte aufzunehmen und zu verteilen.

Weitere Vorteile ergeben sich anhand der Beschreibung eines in den Fig. schematisch dargestellten Ausführungsbeispiels. Es zeigen:
Fig. 1 eine perspektivische rückwärtige Ansicht einer Armlehne mit Armauflage, welche sich in einer ersten Position befindet,
Fig. 2 eine perspektivische Ansicht der Armlehne von vorne in teilweiser Explosionsdarstellung,
Fig. 3 eine Draufsicht auf die Armlehne gemäß Fig. 1,
Fig. 4 eine Rückansicht gemäß Ansichtspfeil IV in Fig. 3,
Fig. 5 eine Seitenansicht gemäß Ansichtspfeil V in Fig. 3, wobei sich die Armauflage in der ersten Position befindet,
Fig. 6 eine Seitenansicht, wobei sich die Armauflage in einer zweiten Position befindet,

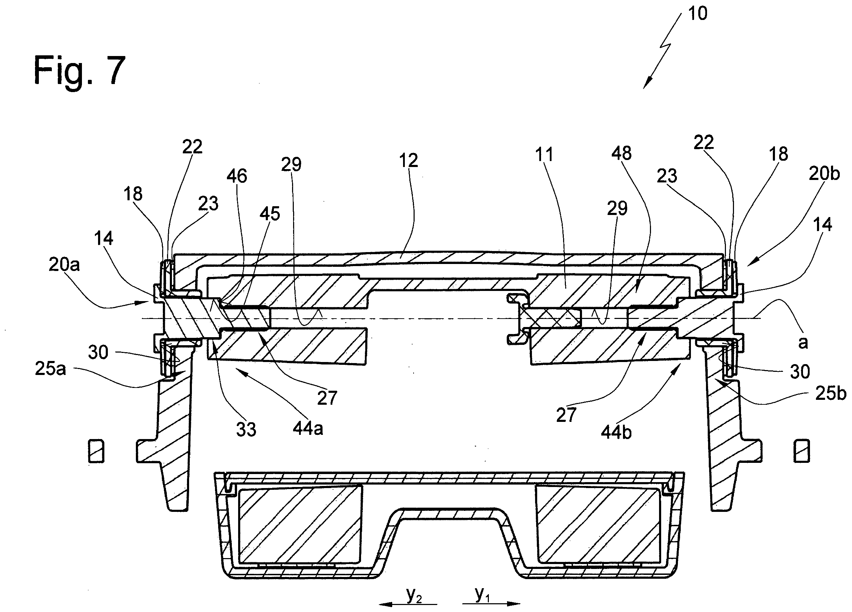

Fig. 7 eine Schnittansicht gemäß Schnittlinie VII - VII in Fig. 5,
Fig. 8, eine perspektivische rückwärtige Ansicht einer Armlehne aus dem Stand der Technik in teilweiser Explosionsdarstellung

Eine Armlehne insgesamt wird in den Fig. mit dem Bezugszeichen 10 bezeichnet. Gleiche Bezugszeichen in den unterschiedlichen Fig. bezeichnen entsprechende Teile, auch wenn kleine Buchstaben oder Hochkommata hinzugefügt oder weggelassen wurden.

Die Armlehne 10 umfasst eine mit einem Polster 13 versehene Armauflage 11, die um eine Schwenkachse a schwenkbar an einem Stützfuß 12 gelagert ist. Der Stützfuß 12 ist in nicht näher dargestellter Weise an der Fahrzeugstruktur befestigt.

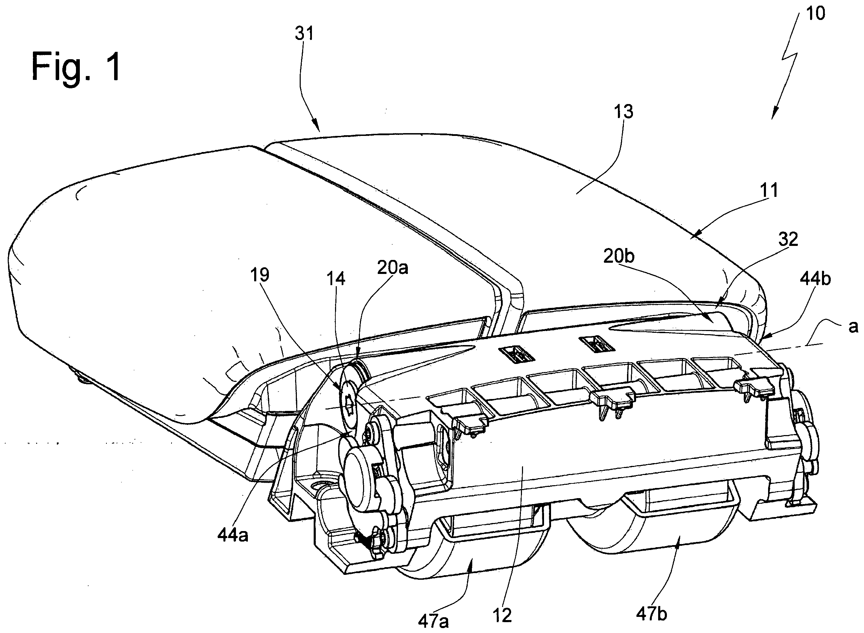

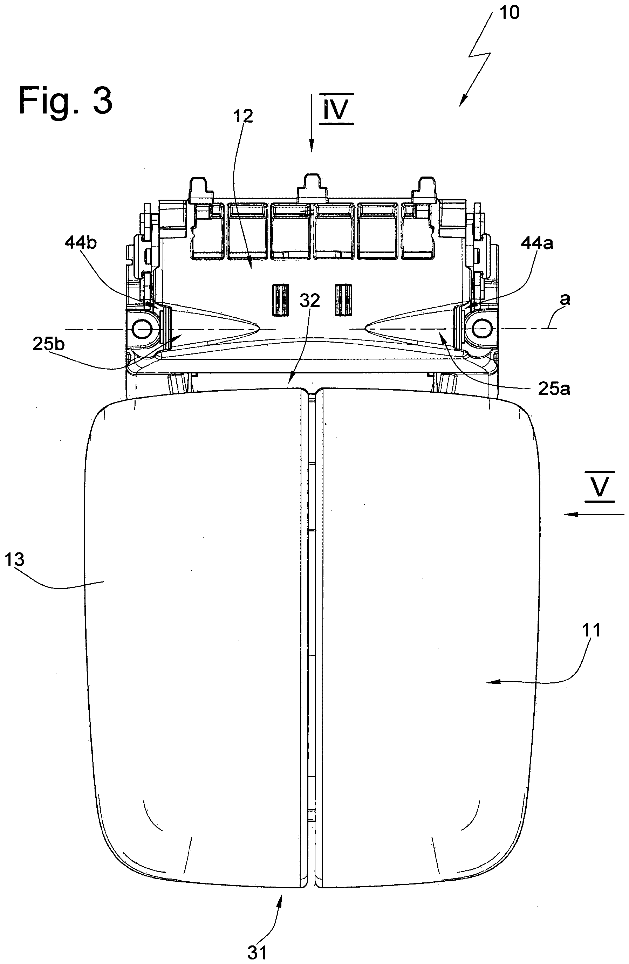

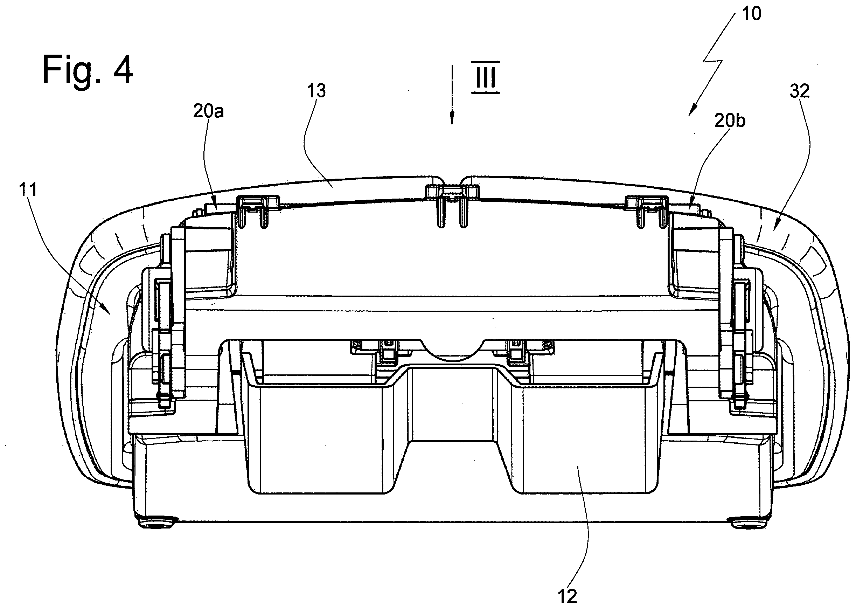

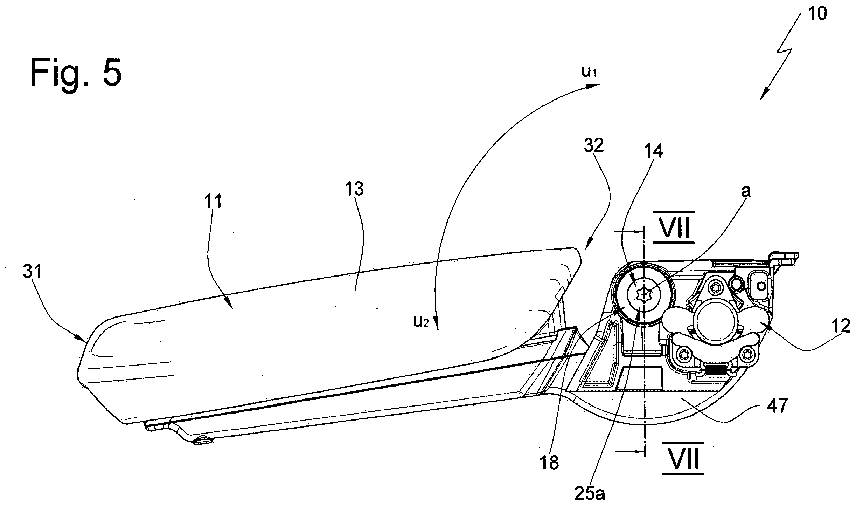

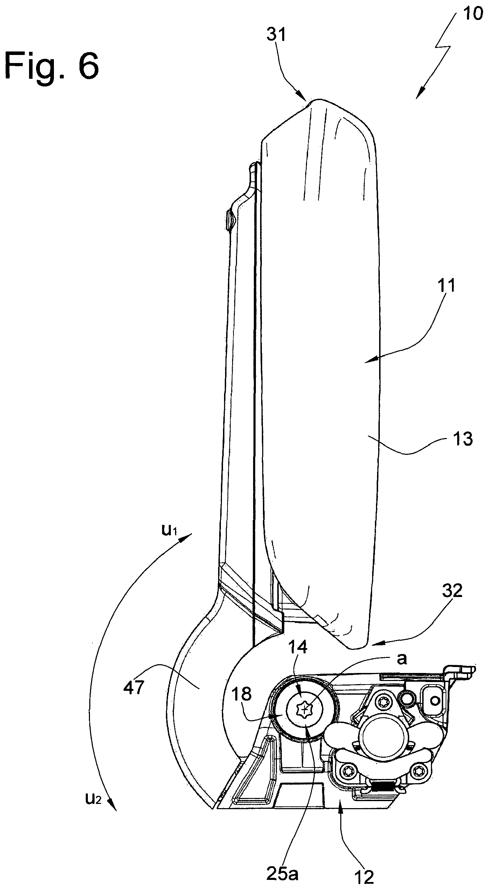

Die Armauflage 11 ist gemäß der Fig. 1 bis 5 in einer ersten, z.B. etwa horizontalen Position angeordnet. Sie kann um die geometrische Schwenkachse a in Richtung u1 in eine in Fig. 6 dargestellte zweite, etwa vertikale Position geschwenkt werden. Aus der zweiten Position kann die Armlehne in Richtung u2 in die erste Position zurückgeschwenkt werden.

Die Armauflage 11 weist einen freien Endbereich 31 sowie einen Endbereich 32 auf. Der Endbereich 32 ist schwenkbar mit dem Stützfuß 12 verbunden. Der Endbereich 32 ist mit einem Endbereich von Armen 47a und 47b verbunden. Ein anderer Endbereich der Arme 47a und 47b ist an einer Achse 48 gehalten. An gegenüberliegenden Seitenbereichen 44a und 44b der Achse 48 ist eine Bohrung 29 angeordnet, deren Mittelachse mit der Schwenkachse a zusammenfällt. Die Achse 48 ist zwischen zwei Haltestegen 25a und 25b des Stützfußes 12 angeordnet.

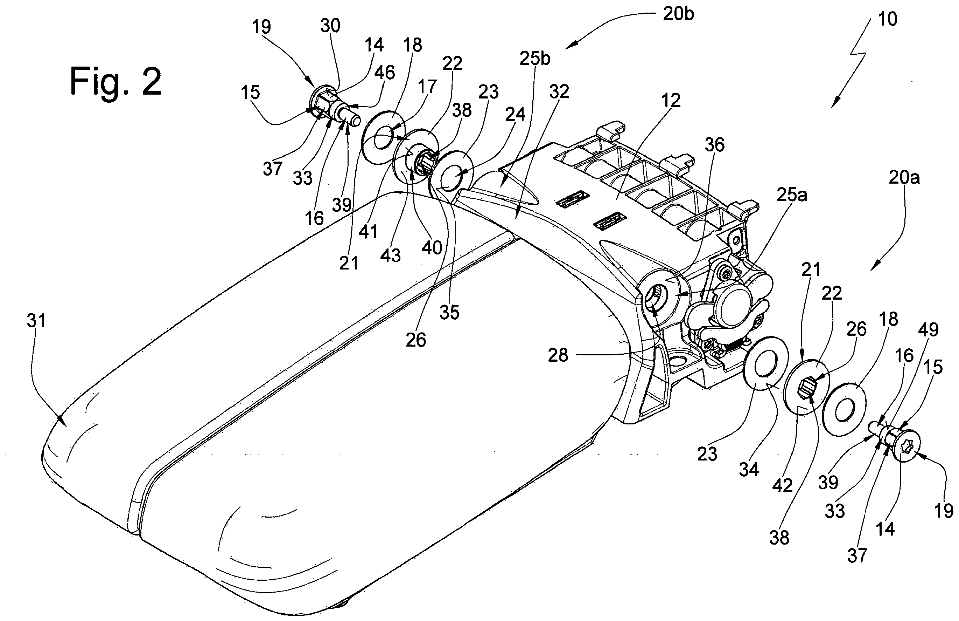

Die schwenkbare Lagerung wird mittels Lagervorrichtungen 20a und 20b (siehe z.B. Fig. 2) gewährleistet. Die Lagervorrichtungen 20a und 20b haben den gleichen Aufbau, sind aber spiegelsymmetrisch angeordnet. Jede Lagervorrichtung 20a und 20b umfasst einen Lagerstift 14, der eine Öffnung 28 in dem Haltesteg 25a bzw. 25b des Stützfußes 12 durchgreift und in die Bohrung 29 der Achse 48 eingreift und dort verschraubt ist.

Beispielhaft wird nachfolgend die Lagervorrichtung 20a beschrieben. Der Lagerstift 14 ist mit einem Kopf 19 sowie mit Bereichen 15, 33 und 16 versehen. Eine Längsmittelachse des Lagerstiftes 14 bildet zugleich die Schwenkachse a. An dem Kopf 19 ist eine Haltefläche 30 ausgebildet, die in Richtung y1 der Schwenkachse a gerichtet ist, und Kräfte in Richtung y2 aufnehmen kann. Der Formschlussbereich 15 ist als Mehrkant 37 ausgebildet. Der Zylinderbereich 33 weist eine kreiszylindrische Passfläche 49 auf, die zu der Schwenkachse a koaxial ist. Der Verbindungsbereich 16 des Lagerstiftes 14 ist mit einem Gewinde 39 versehen. Zwischen dem Formschlussbereich 15 und dem Zylinderbereich 33 befindet sich eine Schulter 46.

Jede Bohrung 29 umfasst ein Gewinde 27 das mit dem Gewinde 39 des Lagerstiftes 14 in Eingriff steht. Der Kreiszylinderbereich 33 des Lagerstiftes 14 greift in einen Zentrierbereich 45 der Bohrung 29. Auf diese Weise ist der Lagerstift 14 mit der Bohrung 29 zentriert. Die fest mit der Armauflage 11 verbundenen Lagerstifte 14 der Lagervorrichtungen 20a und 20b durchgreifen die Öffnungen 28 in den Haltestegen 25a und 25b. Weil die Lagerstifte 14a und 14b mit der Armauflage 11 drehverbunden sind, zwischen Lagerstift 14 und Armauflage 11 somit keine Relativbewegung erfolgt, drehen sich die Lagerstifte relativ zu den Haltestegen 25a bzw. 25b um die Schwenkachse a.

Die Lagervorrichtung 20a umfasst ferner eine Lagerhülse 22, die einen Hülsenbereich 40 und einen etwa scheibenförmigen Kragen 21 aufweist. Die Lagerhülse 22 bildet eine Öffnung 26, die von dem Lagerstift 14 durchsetzt ist, wobei der Hülsenbereich 40 koaxial zu dem Formschlussbereich 15 des Lagerstifts 14 angeordnet ist. Eine zu der Schwenkachse a weisende Innenwand der Lagerhülse 22 ist mit einem Innenmehrkant 38 versehen, der mit dem Mehrkant 37 des Lagerstiftes 14 in Eingriff steht. Aufgrund dieses Formschlusses kann keine Relativbewegung zwischen dem Lagerstift 14 und der Lagerhülse 22 stattfinden.

Der Hülsenbereich 40 bildet eine radial zu der Achse a ausgebildete Außenfläche 41. Die Außenfläche 41 steht in Kontakt mit einer Laibung der Öffnung 28 in dem Haltesteg 25a. Beim Schwenken der Armauflage findet zwischen der Außenfläche 41 und der Laibung der Öffnung 28 eine Relativbewegung um die Schwenkachse a statt.

Der in Richtung y1 weisenden Haltefläche 30 des Lagerstiftes 14 gegenüber liegend weist der Kragen 21 der Lagerhülse 22 eine Gegenfläche 42 auf, die etwa parallel zu der Haltefläche 30 angeordnet ist. Eine Tellerfeder 18 ist koaxial zu der Schwenkachse a zwischen der Haltefläche 30 und der Gegenfläche 42 angeordnet. Eine Bohrung 17 der Tellerfeder 18 wird von dem Lagerstift 14 sowie von dem Hülsenbereich 40 durchsetzt. Weil die Tellerfeder 18 zwischen der Haltefläche 30 und der Gegenfläche 42 verspannt ist, dreht sie sich zusammen mit dem Lagerstift 14 und der Hülse 22. Mit anderen Worten, es findet keine Relativbewegung zwischen Lagerstift 14, Lagerhülse 22 und Tellerfeder 18 statt.

Der Gegenfläche 42 gegenüberliegend ist an dem Kragen 21 eine Anschlagfläche 43 ausgebildet, welche an einer Anlauffläche 34 einer Anlaufscheibe 23 anliegt. Eine der Anlauffläche 34 gegenüberliegende Kontaktfläche 35 der Anlaufscheibe 23 steht mit einer an die Öffnung 28 angrenzenden Außenfläche 36 des Haltestegs 25 in Kontakt.

Der Lagerstift 14, die Tellerfeder 18, die Hülse 22, die Anlaufscheibe 23 und die Bohrung 29 sind koaxial zu der Schwenkachse a angeordnet. Der Lagerstift 14 durchsetzt die Öffnung 17 der Tellerfeder 18, durchgreift außerdem die Öffnung 26 der Hülse 22 und durchgreift eine Öffnung 24 der Anlaufscheibe 23.

Bei der Bewegung der Armauflage 11 zwischen der unteren Position und der oberen Position bewegt sich das mit der Armauflage 11 drehverbundene Paket aus Lagerstift 14, Tellerfeder 18 und Lagerhülse 22 der Lagervorrichtung 20a relativ zu der Anlaufscheibe 23 und zu dem Haltesteg 25a des Stützfußes 12. In gleicher Weise dreht sich das Paket aus Lagerstift 14, Tellerfeder 18 und Lagerhülse 22 der Lagervorrichtung 20b relativ zu der Anlaufscheibe 23 und zu dem Haltesteg 25b des Stützfußes 12. Die Reibpartner sind damit definiert, es tritt keine unvorhergesehene Relativbewegung zwischen Teilen der Lagervorrichtungen 20a und 20b auf, die unerwünschte Geräusche verursachen.

Die Tellerfeder 18 der Lagervorrichtung 20a belastet die Armauflage 11 in Richtung y1 und die Tellerfeder 18 der Lagervorrichtung 20b belastet die Armauflage 11 in Richtung y2. Es kann somit kein Klappern der Armlehne 10 aufgrund von axialen Bewegungen der Armauflage 11 auftreten.

Zur Montage der Armauflage 11 an dem Stützfuß 12 werden auf dem ersten Bereich 15 des Lagerstiftes 14 der Reihenfolge nach die Tellerfeder 18, die Lagerhülse 22 und die Anlaufscheibe 23 aufgesteckt. Anschließend werden der Lagerstift 14 und der den ersten Bereich 15 koaxial umgebende Hülsenbereich 40 durch die Öffnung 28 gesteckt. Die Bohrung 29 der Achse 48 und die Öffnung 28 werden in Überdeckung gebracht. Der zweite Bereich 16 des Lagerstiftes wird in der Bohrung 29 verschraubt, wobei der Zylindrische Bereich 33 des Lagerstiftes 14 mit dem Zentrierbereich 45 der Bohrung 29 zusammenwirkt. Auf diese Weise werden sowohl die Lagervorrichtung 20a, als auch die Lagervorrichtung 20b montiert.

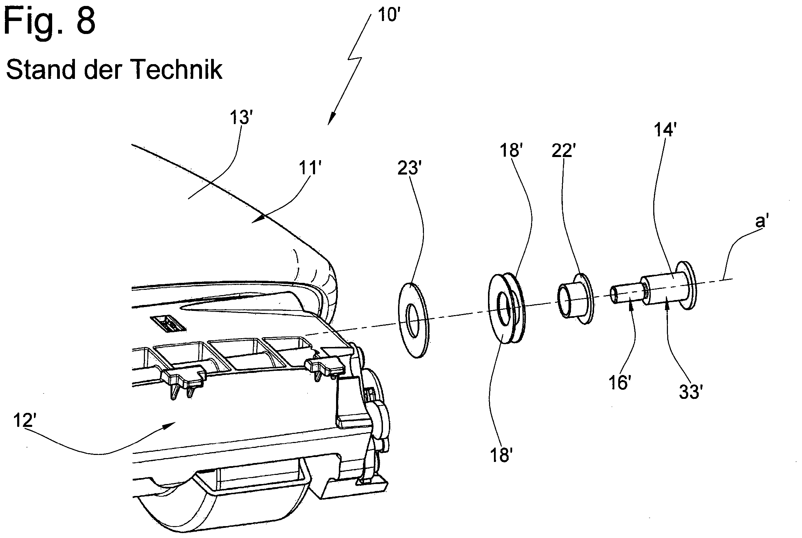

In Fig. 8 ist eine Armlehne 10' aus dem Stand der Technik dargestellt. Eine Armauflage 11' der Armlehne 10' ist um eine Schwenkachse a' schwenkbar an Haltestegen eines Stützfußes 12' gelagert. Die schwenkbare Lagerung erfolgt mittels zwei gegenüber liegenden Lagervorrichtungen. Jede Lagervorrichtung umfasst einen Lagerstift 14', welcher fest mit der Armauflage 11' verschraubt ist und in einer Öffnung des Haltestegs gelagert ist. Auf diese Weise bilden der Lagerstift 14' und die Öffnung des Haltestegs beider Lagervorrichtungen die Schwenkachse a'.

Der Lagerstift 14' weist einen zylindrischen Bereich 33' auf. Koaxial zu dem zylindrischen Bereich 33' sind eine Lagerhülse 22', zwei Tellerfedern 18' und eine Anlaufscheibe 23' angeordnet. Der Lagerstift 14', die Lagerhülse 22', die Tellerfedern 18' und die Anlaufscheibe 23' sind um die Achse a' drehbar. Der Kopf des Lagerstiftes 14' liegt in axialer Richtung der Schwenkachse a an dem Kragen der Lagerhülse 22' an. Der Kragen steht darüber hinaus axial mit einer der Tellerfedern 18' in Kontakt. Eine Tellerfeder 18' liegt axial an der Anlaufscheibe 23' an und die Anlaufscheibe 23' steht darüber hinaus mit dem Stützfuß 12' in Kontakt. Zwischen den benachbarten, in Kontakt stehenden Teilen 12'/23', 23'/18', 18'/22' und 22'/14' können bei der Vorrichtung aus dem Stand der Technik Relativbewegungen auftreten, die zu unerwünschten Geräuschen führen.

## Patentansprüche

1. Armlehne umfassend ein erstes Teil (12) und wenigstens ein zweites Teil (11) in Form einer Armauflage, welches mittels zwei Lagervorrichtungen (20a, 20b) um eine Schwenkachse (a) schwenkbar relativ zu dem ersten Teil (12) gelagert ist, wobei jede Lagervorrichtung (20a, 20b) einen Lagerstift (14) umfasst, auf welchem eine Lagerhülse (22), die einen Kragen (21) mit einer axialen Gegenfläche (42) ausbildet, koaxial zu der Lagerachse (a) angeordnet ist, **dadurch gekennzeichnet, dass** zwischen einer axialen Haltefläche (30) des Lagerstiftes (14) und der axialen Gegenfläche (42) der Lagerhülse (22) wenigstens ein Funktionselement angeordnet ist und wobei ein Funktionselement von einer Feder (18) gebildet ist, wobei der Lagerstift (14) erste Formschlussmittel aufweist, die mit zweiten Formschlussmitteln der Lagerhülse (22) in Eingriff stehen und eine Relativbewegung zwischen der Lagerhülse (22) und dem Lagerstift (14) in Schwenkrichtung (u1, u2) verhindern.

2. Armlehne nach Anspruch 1, **dadurch gekennzeichnet, dass** die ersten Formschlussmittel an einer Außenfläche des Lagerstiftes und die zweiten Formschlussmittel an einer mit der Außenfläche in Kontakt stehenden Innenfläche der Lagerhülse ausgebildet sind.

3. Armlehne nach Anspruch 1 oder 2, **dadurch gekennzeichnet, dass** die zusammenwirkenden Formschlussmittel von Verzahnungen oder Mehrkantstrukturen gebildet sind.

4. Armlehne nach einem der vorangehenden Ansprüche, **dadurch gekennzeichnet, dass** der Lagerstift (14) eine Öffnung (28) in einem Haltesteg (25a, 25b) des ersten Teils (12) durchgreift und in die Armauflage (11) eingreift.

5. Armlehne nach Anspruch 1, **dadurch gekennzeichnet, dass** die Feder von einer Tellerfeder (18) gebildet ist.

6. Armlehne nach einem der vorangehenden Ansprüche, **dadurch gekennzeichnet, dass** der Lagerstift (14) fest mit dem ersten Teil oder mit dem zweiten Teil verbunden ist.

7. Armlehne nach einem der vorangehenden Ansprüche, **dadurch gekennzeichnet, dass** die Lagervorrichtung (20a, 20b) eine Scheibe (23) umfasst, welche mit dem ersten Teil (12) in Kontakt steht, um auf das erste Teil (12) wirkende Kräfte aufzunehmen und zu verteilen.

## Claims

1. Armrest, comprising a first part (12) and at least a second part (11) in the form of an arm support, which is mounted by means of two bearing devices (20a, 20b) in such a way as to be pivotable relative to the first part (12) about a pivot axis (a), wherein each bearing device (20a, 20b) comprises a bearing pin (14), on which a bearing sleeve (22) that forms a collar (21) with an axial counter-surface (42) is arranged coaxial to the bearing axis (a), **characterized in that** at least one functional element is arranged between an axial retaining surface (30) of the bearing pin (14) and the axial counter-surface (42) of the bearing sleeve (22), and wherein one functional element is formed by a spring (18), wherein the bearing pin (14) has first form-fitting means which are in engagement with second form-fitting means of the bearing sleeve (22) and prevent a relative movement between the bearing sleeve (22) and the bearing pin (14) in the pivoting direction (u1, u2) .

2. Armrest according to claim 1, **characterized in that** the first form-fitting means are formed on an outer surface of the bearing pin, and the second form-fitting means are formed on an inner surface of the bearing sleeve that is in contact with the outer surface.

3. Armrest according to claim 1 or 2, **characterized in that** the cooperating form-fitting means are formed by teeth or polygonal structures.

4. Armrest according to any one of the preceding claims, **characterized in that** the bearing pin (14) passes through an opening (28) in a retaining web (25a, 25b) of the first part (12) and engages in the arm support (11).

5. Armrest according to claim 1, **characterized in that** the spring is formed by a disc spring (18).

6. Armrest according to any one of the preceding claims, **characterized in that** the bearing pin (14) is fixedly connected to the first part or to the second part.

7. Armrest according to any one of the preceding claims, **characterized in that** the bearing device (20a, 20b) comprises a washer (23), which is in contact with the first part (12), for absorbing and distributing forces acting on the first part (12).

## Revendications

1. Accoudoir comprenant une première partie (12) et au moins une deuxième partie (11) en forme d'appui-bras, qui est supportée au moyen de deux dispositifs de support (20a, 20b) de façon à pouvoir pivoter autour d'un axe de pivotement (a) par rapport à la première partie (12), chaque dispositif de support (20a, 20b) comprenant une goupille de support (14) sur laquelle un manchon de support (22), qui forme une collerette (21) avec une surface antagoniste axiale (42), est disposé de façon coaxiale par rapport à l'axe de support (a) **caractérisé en ce qu'**entre une surface de maintien axiale (30) de la goupille de support (14) et la surface antagoniste axiale (42) du manchon de support (22) est disposé au moins un élément fonctionnel et un élément fonctionnel est formé par un ressort (18), la goupille de support (14) présentant des premiers moyens d'engagement positif qui sont en prise avec des deuxièmes moyens d'engagement positif du manchon de support (22) et empêchent un mouvement relatif entre le manchon de support (22) et la goupille de support (14) dans un sens de pivotement (u1, u2).

2. Accoudoir selon la revendication 1, **caractérisé en ce que** les premiers moyens d'engagement positif sont formés sur une surface extérieure de la goupille de support et les deuxièmes moyens d'engagement positif sur une surface intérieure du manchon de support en contact avec la surface extérieure.

3. Accoudoir selon la revendication 1 ou 2, **caractérisé en ce que** les moyens d'engagement positif en interaction sont formés par des dentures ou des structures polygonales.

4. Accoudoir selon une des revendications précédentes, **caractérisé en ce que** la goupille de support (14) traverse une ouverture (28) dans une barrette de maintien (25a, 25b) de la première partie (12) et pénètre dans l'appui-bras (11).

5. Accoudoir selon la revendication 1, **caractérisé en ce que** le ressort est formé par une rondelle-ressort (18).

6. Accoudoir selon une des revendications précédentes, **caractérisé en ce que** la goupille de support (14) est fixée à la première partie ou à la deuxième partie.

7. Accoudoir selon une des revendications précédentes, **caractérisé en ce que** le dispositif de support (20a, 20b) comprend une rondelle (23) qui est en contact avec la première partie (12) pour recevoir et répartir des forces agissant sur la première partie (12).
